# EUROPÄISCHE PATENTSCHRIFT

(11) **EP 3 103 559 B1**
(45) Veröffentlichungstag und Bekanntmachung des Hinweises auf die Patenterteilung: **11.08.2021**
(21) Anmeldenummer: 16169101.9
(22) Anmeldetag: 11.05.2016
(51) Int. Cl.: B21J 15/04, B21J 15/36

(54) **VERFAHREN ZUM BEFESTIGEN EINES NIETELEMENTS UND ENTSPRECHENDES BEFESTIGUNGSSYSTEM HIERFÜR**
METHOD FOR FIXING A RIVET ELEMENT AND CORRESPONDING FIXING SYSTEM
PROCEDE DE FIXATION D'UN ELEMENT DE RIVET ET SYSTEME DE FIXATION ASSOCIE

(30) Priorität: 11.06.2015 DE 102015109244
(43) Veröffentlichungstag der Anmeldung: 14.12.2016
(73) Patentinhaber: Profil Verbindungstechnik GmbH & Co. KG, 61381 Friedrichsdorf (DE)
(72) Erfinder: Babej, Jiri, 35423 Lich (DE); Humpert, Richard, 61231 Bad Nauheim (DE); Sowa, Christian, 63165 Mühlheim/Main (DE)
(74) Vertreter: Manitz Finsterwald Patent- und Rechtsanwaltspartnerschaft mbB

(56) Entgegenhaltungen:
- WO-A1-01/03881
- WO-A1-2013/183825
- BE-A- 376 557
- DE-B3-102010 033 714
- GB-A- 542 308
- JP-U- S62 105 736
- US-A- 2 318 191

## Beschreibung

Die vorliegende Erfindung betrifft ein Verfahren zum Befestigen eines Nietelements an einem Werkstück, das ein zur Aufnahme eines Nietabschnitts des Nietelements vorgesehenes, vorgeformtes Loch aufweist.

Ein solches Verfahren ist grundsätzlich bekannt und umfasst typischerweise, dass der Nietabschnitt im Zuge des Befestigungsvorgangs in das vorgeformte Loch eingeführt und derart verformt wird, dass der Nietabschnitt das Werkstück hintergreift und zwischen dem Nietelement und dem Werkstück eine formschlüssige und auch kraftschlüssige Nietverbindung hergestellt ist. Der Nietabschnitt ist beispielsweise ein hohlzylindrischer Abschnitt, der an einem Ende auf bekannte Weise radial nach außen umgebogen bzw. umgebördelt wird, um die Nietverbindung herzustellen. Bei der industriellen Anwendung dieses Verfahrens wird typischerweise ein Befestigungssystem bestehend aus einem Setzkopf und einer Matrize eingesetzt. Hierbei wird das Werkstück zunächst auf einer Auflagefläche der Matrize positioniert, so dass das Loch des Werkstücks und ein zentraler Stempel der Matrize fluchten. Sodann wird das Nietelement mit seinem Nietabschnitt mittels des Setzkopfs durch das vorgeformte Loch des Werkstücks in Richtung der Matrize bewegt und gegen den Stempel der Matrize gepresst, um den Nietabschnitt zur Herstellung der Nietverbindung zu verformen. Damit der Nietabschnitt das Werkstück hintergreifen kann, wird das Werkstück vor dem Befestigen des Nietelements im Bereich um das Loch sickenartig verformt. Dadurch entsteht zwischen dem Stempel und der Wandung des Lochs ein Spalt, in den der Nietabschnitt eingebracht wird. D.h. in diesem Bereich wird ein genügend großer Raum zwischen dem Werkstück und der Matrize bereitgestellt, in den der Nietabschnitt eingreifen kann. Nachteilig ist dabei allerdings, dass die vor dem Befestigen notwendige Verformung des Werkstücks zur Bildung der Sicke unter Umständen einen separaten Vorverarbeitungsschritt erfordert, welcher zusätzlich zu dem eigentlichen Befestigen des Nietelements durchgeführt werden muss. Ferner muss die entsprechende Verformung des Werkstücks im Bereich um das Loch - die aus vielerlei Gründen störend sein kann - an die Dimensionen des umzuformenden Nietabschnitts, z.B. an die Dicke und Länge des Nietabschnitts, angepasst sein, sodass die gewünschte Umformung des Nietabschnitts und das zuverlässige Hintergreifen des Werkstücks auch tatsächlich ermöglicht werden.

Die GB 542,308 offenbart ein Verfahren mit den Merkmalen des Oberbegriffs des Anspruchs 1, sowie eine Matrize mit den Merkmalen des Oberbegriffs des Anspruchs 10.

Es ist daher eine Aufgabe der vorliegenden Erfindung, ein Verfahren der eingangs genannten Art zu schaffen, bei dem die vorstehend erläuterten Probleme vermieden werden.

Die Lösung dieser Aufgabe erfolgt durch ein Verfahren mit den Merkmalen des Anspruchs 1.

Erfindungsgemäß wird das Werkstück vor dem Befestigungsvorgang mittels zumindest einem beweglich und/oder elastisch ausgebildeten Abstandshalter einer Matrize zum Umformen des Nietabschnitts in einem wohldefinierten Abstand von einer Anlagefläche der Matrize positioniert, so dass zwischen einer Wandung des Lochs und einem zum Umformen des Nietabschnitts vorgesehenen Stempel der Matrize ein Spalt gebildet ist, und wobei der Nietabschnitt im Zuge des Befestigungsvorgangs in den Spalt eingebracht wird und durch den Stempel umgeformt wird, um das Werkstück im Bereich des Loches zu hintergreifen.

Ein wesentlicher Vorteil dieser Lösung besteht darin, dass das Werkstück durch den Abstandshalter in einem definierten Abstand von einer Anlagefläche der Matrize gehalten wird, wodurch ein zum hintergreifenden Umformen des Nietabschnitts ausreichend großer Spalt genau festgelegt und insbesondere während dem Befestigungsvorgang zuverlässig eingehalten oder kontrolliert reduziert werden kann. In dieser Hinsicht ist das erfindungsgemäße Verfahren beispielsweise besonders geeignet für unterschiedlich dimensionierte Nietelemente und Werkstücke, da die zum Umformen des Nietabschnitts erforderliche Weite des Spalts lediglich durch den Abstandshalter festgelegt und dementsprechend einfach angepasst werden kann. Die Weite des Spalts kann - muss aber nicht - identisch zu dem Abstand sein. Die Spaltweite kann auch variieren, d.h. lokal unterschiedlich sein. Es ist beispielsweise möglich, dass die Anlagefläche gegenüber einer Umformfläche des Stempels der Matrize - in der Regel nur leicht - abgesetzt ist. In diesem Fall weicht die Weite des Spalts von dem Abstand ab.

Ein weiterer Vorteil des erfindungsgemäßen Verfahrens ist darin zu sehen, dass das Nietelement direkt an dem Werkstück befestigt werden kann und - abgesehen von der Bildung des Lochs - keine Vorverarbeitungsschritte nötig sind. Das Werkstück kann eben ausgebildet bleiben und es muss nicht im Bereich des Loches eine sickenartige Verformung vorgesehen sein. Ein Verzicht auf eine sickenartige Verformung ist darüber hinaus auch insofern vorteilhaft, da eine sickenartige Verformung einen Vorsprung darstellt, welcher z.B. bei einem Positionieren in und/oder bei einem Entfernen des Werkstücks aus dem jeweilgen Bearbeitungswerkzeug störend sein kann. Auf diese Weise wird - insbesondere bei einem angewinkelten Werkstück - z.B. auch ein Lochen des Werkstücks quer zur Entformungsrichtung des Werkstücks ermöglicht, ohne dass eine Bewegung des Werkstücks durch eine sickenartige Verformung behindert wird.

Es versteht sich, dass das Werkstück im Bereich um das Loch nicht vollkommen eben ausgebildet sein muss, um die Vorteile des erfindungsgemäßen Verfahrens zu realisieren. So stellen insbesondere geringe Verformungen des Werkstücks im Bereich um das Loch, welche beispielsweise durch die Bildung des Lochs verursacht werden, kein Problem für ein erfolgreiches Ausführen des erfindungsgemäßen Verfahrens dar.

Ein weiterer Vorteil des erfindungsgemäßen Verfahrens ist darin zu sehen, dass das Werkstück erst nach dem Beginn eines Umformens des Nietabschnitts zu der Anlagefläche hin bewegt wird. Hierdurch kann sichergestellt werden, dass das Werkstück erst dann bewegt wird, wenn der Nietabschnitt bereits mit einer hinreichend großen Kraft gegen den Stempel der Matrize gepresst wird und hierdurch ein Umformen des Nietabschnitts bereits in Gang gesetzt wurde. Der Nietabschnitt muss hierbei noch nicht notwendigerweise in den Spalt eingreifen. Beispielsweise kann der Spalt vor Beginn der Bewegung des Werkstücks größer sein, als es für ein Eingreifen des Nietabschnitts eigentlich notwendig wäre. Somit kann ein Umformen des Nietabschnitts gleichzeitig zu der Bewegung des Werkstücks erfolgen, wobei der Nietabschnitt natürlich noch rechtzeitig in den Spalt eingebracht wird, bevor der zur Verfügung stehende Spalt/Zwischenraum zu klein geworden ist.

Weitere Ausführungsformen des erfindungsgemäßen Verfahrens sind in der Beschreibung, den Ansprüchen und den beigefügten Zeichnungen angegeben.

Gemäß einer Ausführungsform ragt der Abstandshalter zumindest vor dem Befestigungsvorgang aus der Anlagefläche der Matrize heraus, wobei der aus der Anlagefläche herausragende Abschnitt des Abstandshalters den Abstand definiert. Grundsätzlich kann der Abstand aber auch in Bezug auf andere Abschnitte und Flächen der Matrize definiert werden. Beispielsweise kann der Abstand auch zwischen dem Werkstück und einem Abschnitt des Stempels der Matrize definiert werden. Erfindungsgemäß kommt es lediglich darauf an, dass der Abstand zwischen dem Werkstück und der Matrize so geartet ist, dass zwischen der Wandung des Lochs des Werkstücks und der Unterseite des Werkstücks einerseits und dem Stempel der Matrize bzw. der Matrize selbst andererseits ein Spalt oder Zwischenraum gebildet ist, um den Nietabschnitt so umformen zu können, dass dieser das Werkstück im Bereich des Loches hintergreift und so eine formschlüssige und vorzugsweise kraftschlüssige Verbindung des Nietelements mit dem Werkstück hergestellt wird.

Das erfindungsgemäße Verfahren kann erweitert werden, indem das Werkstück während des Befestigungsvorgangs ab einem bestimmten Zeitpunkt zu der Anlagefläche der Matrize hin bewegt wird. Hierdurch kann beispielsweise ein abschließendes Einpressen des hintergreifenden Nietabschnitts in das Werkstück bewirkt werden, so dass die Unterseite des Werkstücks im Bereich des Loches trotz des befestigten Nietabschnitts zumindest im Wesentlichen eben und/oder glatt ausgebildet ist. Ferner kann durch ein Einpressen des hintergreifenden Nietabschnitts zusätzlich ein Kraftschluss zwischen dem Nietelement und dem Werkstück herbeigeführt werden. Durch eine Bewegung des Werkstücks hin zu der Anlagefläche werden allerdings auch der Abstand und die Weite des zwischen dem Werkstück und dem Stempel gebildeten Spalts/Zwischenraums verringert. Damit der erfindungsgemäße Vorteil des zum Umformen des Nietabschnitts ausreichend großen Spalts dennoch erfüllt bleibt, muss sichergestellt werden, dass das Werkstück zumindest so lange in dem definierten Abstand zu der Anlagefläche der Matrize gehalten wird, bis der Nietabschnitt zumindest teilweise in den Spalt eingegriffen und/oder das Werkstück hintergriffen hat.

Gemäß einer Ausführungsform wird das Werkstück erst nach einem zumindest abschnittsweisen Einbringen des Nietabschnitts in den Spalt zu der Anlagefläche hin bewegt wird. Hierdurch wird verhindert, dass der Spalt durch eine Bewegung des Werkstücks hin zu der Anlagefläche bereits so weit verkleinert wird, dass der Nietabschnitt nicht mehr in den Spalt einzugreifen vermag. Mit anderen Worten wird eine Verkleinerung des Spalts jenseits der Dimensionen des eingreifenden Nietabschnitts dadurch verhindert, dass der Nietabschnitt bereits vor der Bewegung des Werkstücks in den Spalt eingreift.

Das Werkstück kann auch erst nach dem Abschluss des Umformens des Nietabschnitts zu der Anlagefläche hin bewegt werden. Mit anderen Worten kann der Zeitpunkt des Beginns der Werkstückbewegung so gewählt werden, dass das Umformen des Nietabschnitts zumindest im Wesentlichen abgeschlossen ist und der Nietabschnitt das Werkstück bereits signifikant um- bzw. hintergreift. Eine unerwünschte Behinderung des Umformens des Nietabschnitts durch das Werkstück kann somit ausgeschlossen werden.

Gemäß einer weiteren Ausführungsform wird das Werkstück zumindest dadurch bewegt, dass ein Anschlagabschnitt des Nietelements, insbesondere ein Flanschabschnitt des Nietelements an einer der Matrize abgewandten Seite des Werkstücks zur Anlage kommt und das Werkstück hierdurch im Zuge einer weiteren Bewegung des Nietelements in Richtung zu der Anlagefläche hin bewegt wird. Alternativ oder zusätzlich kann ein das Nietelement einbringender Setzkopf, durch den das Nietelement in Richtung der Matrize bewegt wird, eine Bewegung des Werkstücks hin zu der der Anlagefläche bewirken. Das Werkstück muss allerdings nicht notwendigerweise aktiv bewegt werden. So kann eine Bewegung des Werkstücks hin zu der Anlagefläche auch als eine Relativbewegung umgesetzt werden, indem die Matrize zu dem Werkstück hin bewegt wird.

Gemäß einer bevorzugten Ausführungsform wird der Abstandshalter - zumindest wenn dieser beweglich ausgebildet ist - durch eine zugeordnete Vorspanneinrichtung mit einer definierten Kraft beaufschlagt und in eine erste Position vorgespannt, wobei der Abstandshalter in der ersten Position den Abstand definiert. Die Vorspanneinrichtung kann beispielsweise durch eine Druckfeder, ein hydraulisches oder ein pneumatisches Lagerungssystem realisiert sein. Sofern mehrere Abstandshalter vorgesehen sind, können diese gemeinsam durch eine Vorspanneinrichtung vorgespannt werden. Alternativ kann jeder Abstandshalter einzeln oder eine jeweilige Gruppe von Abstandshaltern durch jeweils eine zugeordnete Vorspanneinrichtung vorgespannt werden.

Vorzugsweise ist der Abstandshalter aus einem festen Material, wie etwa Stahl, Titan oder dergleichen gebildet. Alternativ kann der Abstandshalter zumindest teilweise auch aus einem elastischen Material gebildet sein, so dass er aufgrund seiner elastischen Eigenschaften eine erste Position einnimmt. Auf eine Vorspanneinrichtung kann in diesem Fall verzichtet werden. Ferner sind auch Konstruktionen denkbar, bei denen der Abstandshalter bewegbar oder verschiebbar und elastisch ausgebildet ist.

Gemäß einer weiteren Ausführungsform wird der Abstandshalter während dem Befestigungsvorgang aus der ersten Position - aktiv oder bevorzugt passiv - verfahren und/oder verformt, wenn das Werkstück zu der Anlagefläche hin bewegt wird, insbesondere um den gleichen Betrag wie das Werkstück. Hierdurch wird verhindert, dass das Werkstück während seiner Bewegung hin zu der Anlagefläche durch den Abstandshalter beschädigt oder plastisch verformt wird. Sofern der Abstandshalter durch eine Vorspanneinrichtung in die erste Position vorgespannt wird, ist die entsprechende Vorspannkraft der Vorspanneinrichtung vorzugsweise derart angepasst, dass ein Verfahren des Abstandshalters aus der ersten Position ohne eine Beschädigung oder Verformung des Werkstücks möglich ist, d.h. der Abstandshalter weicht gegenüber dem Werkstück zurück und verursacht keine Verformung des Werkstücks. Im Falle eines verformbaren Abstandshalters sind die elastischen Eigenschaften des Materials entsprechend gewählt.

Es versteht sich, dass eine insbesondere geringfügige Verformung des Werkstücks durch den Abstandshalter zugelassen werden kann und dass dies nicht unbedingt als eine Beschädigung oder Verformung des Werkstücks im obigen Sinn aufgefasst werden muss. Bei vielen industriellen Anwendungen ist eine leichte Verformung des Werkstücks unerheblich und stellt keinen Mangel des Verfahrens dar, sondern kann unter Umständen sogar gewünscht sein. Eine vollständige Vermeidung einer Verformung des Werkstücks durch den zumindest einen Abstandshalter ist somit lediglich eine bevorzugte Anpassung des Verfahrens, z.B. wenn das Werkstück bei seiner späteren Verwendung exponiert ist und/oder ästhetischen Ansprüchen genügen soll und/oder wenn derartige Verformungen aus anderen Gründen nachteilig sind.

Gemäß einer weiteren Ausführungsform wird der Abstandshalter während dem Befestigungsvorgang aus der ersten Position in eine zweite Position verfahren und/oder verformt. Insbesondere liegt das Werkstück in der zweiten Position an der Anlagefläche der Matrize an. Hierzu kann der Abstandshalter in der zweiten Position im Wesentlichen vollständig in einen Innenbereich der Matrize versetzt - oder im Falle eines verformbaren Abstandshalters - verformt sein. Das Versetzen des Abstandshalters in die zweite Position kann passiv oder aktiv erfolgen. Beispielsweise kann der Abstandshalter entgegen der Vorspannrichtung aufgrund einer hinreichenden Kraftbeaufschlagung, welche durch das Werkstück ausgeübt wird, in die zweite Position gedrängt werden. Alternativ oder zusätzlich kann der Abstandshalter auch durch eine mittels einer Sensorik ausgelösten Aktivbewegung in die zweite Position versetzt werden. Beispielsweise kann es bei Überschreiten eines vorbestimmten Kraftschwellenwerts erwünscht sein, dass der Abstandshalter aktiv zurückgezogen wird, um Schäden an dem Werkstück, dem Abstandshalter oder der Matrize zu vermeiden. Auch ein schlagartiges aktives oder passives Zurückweichen des Abstandshalters kann vorgesehen sein, wenn der Schwellenwert überschritten wird. Der Abstandshalter ist in diesem Fall dann mit keiner wesentlichen Kraft mehr beaufschlagt.

Gemäß einer weiteren Ausführungsform ist das Nietelement während dem Befestigungsvorgang in ein komplementär zu dem Befestigungselement ausgebildeten Aufnahmeraum eines Setzkopfes aufgenommen, insbesondere wobei der Setzkopf eine Werkstückanlagefläche aufweist. Hierdurch kann das Nietelement kontrolliert in Richtung hin zu der Matrize bewegt werden, wobei der Nietabschnitt in das Loch des Werkstücks eingebracht und sodann im Zuge einer weiteren Bewegung des Nietelements hin zu der Matrize umgeformt wird. Insbesondere ab dem Zeitpunkt, ab dem das Werkstück zu der Anlagefläche hin bewegt wird, kann die Werkstückanlagefläche des Setzkopfes an dem Werkstück anliegen und die Bewegung des Werkstücks bewirken oder zumindest unterstützen.

Der Abstandshalter ist insbesondere radial beabstandet von dem Stempel angeordnet, so dass der Nietabschnitt das Werkstück vorzugsweise vollständig hintergreifen kann und nicht etwa durch den Abstandshalter behindert wird. Vorzugsweise sind mehrere, insbesondere drei z.B. stiftartig ausgebildete Abstandshalter symmetrisch um den Stempel der Matrize angeordnet. Ein dem Werkstück zugewandter Endabschnitt eines jeweiligen Abstandshalters weist für eine beschädigungsfreie Lagerung des Werkstücks vorzugsweise eine konvexe oder gerundete Lagerfläche auf. Zum zuverlässigen Umformen des Nietabschnitts kann die Umformfläche gegenüber der Anlagefläche der Matrize stetig oder durch eine oder mehrere Stufen abgesetzt sein. Hierdurch kann auch ein zuverlässiges Versenken des Nietabschnitts in das Werkstück bewerkstelligt werden, wenn das Werkstück bis zur Anlagefläche der Matrize bewegt wird bzw. an der Anlagefläche zur Anlage kommt.

Gemäß einer weiteren bevorzugten Ausführungsform wird das Werkstück zumindest im Bereich des hintergreifenden Nietabschnitts zumindest teilweise in einen Aufnahmeraum gepresst, der an einem Anschlagabschnitt des Nietelements ausgebildet ist. Der Aufnahmeraum kann beispielsweise eine umlaufende Nut sein, welche sich zwischen dem Anschlagabschnitt und dem Nietabschnitt erstreckt. Der Anschlagabschnitt ist insbesondere als ein Flanschabschnitt des Nietelements ausgebildet. Die vorstehend erläuterte Bewegung des Werkstücks hin zu der Anlagefläche kann insbesondere dadurch bewirkt werden, dass der Flanschabschnitt des Nietelements an dem Werkstück anschlägt und das Werkstück hierdurch - d.h. auch ohne Unterstützung durch den Setzkopf, z.B. wenn dieser keine Werkstückanlagefläche aufweist - bei einer weiteren Bewegung des Nietelements in Richtung zu der Matrize hin zwangsläufig mit bewegt wird.

Der Aufnahmeraum des Nietelements kann mehrere Funktionen besitzen. So kann beispielsweise ein Rand des Loches in den Aufnahmeraum gedrückt werden und zumindest teilweise in den Aufnahmeraum aufgenommen werden. Das Nietelement kann hierdurch besser an dem Werkstück fixiert werden. Darüber hinaus erlaubt der Aufnahmeraum auch ein Verformen der das Loch begrenzenden Wandung des Werkstücks in eine Richtung weg von dem hintergreifenden Nietabschnitt. Hierdurch wird auf einer dem Aufnahmeraum des Nietelements abgewandten Seite des Werkstücks, d.h. auf der Werkstückunterseite, ein Aufnahmeraum für den Nietabschnitt geschaffen, so dass dieser im Bereich des Hintergriffs in eine Ebene des Werkstücks versenkt werden kann, um eine ebene Werkstückunterseite zu erhalten. Mit anderen Worten kann der Nietabschnitt im Bereich der Lochwandung gegen das Werkstück gepresst werden, welches seinerseits in den Aufnahmeraum ausweicht, so dass der Nietabschnitt nach dem Befestigen des Nietelements nicht von dem Werkstück absteht.

Der Aufnahmeraum kann eine oder mehrere Rippen aufweisen, welche sich in radialer Richtung quer zu dem Verlauf des Aufnahmeraums erstrecken. Hierdurch kann eine Verdrehsicherung realisiert werden, indem die Rippe bzw. die Rippen in das Werkstück gepresst werden, wenn das Werkstück in den Aufnahmeraum gedrückt wird. Einem unerwünschten Verdrehen des Nietelements relativ zu dem Werkstück kann so entgegengewirkt werden.

Die Erfindung betrifft ferner eine Matrize gemäß Anspruch 10, zum Befestigen eines Nietelements an einem Werkstück, bevorzugt an einem Blechteil, insbesondere gemäß einer der vorstehend beschriebenen Ausführungsformen des erfindungsgemäßen Verfahrens, wobei die Matrize zumindest einen beweglichen und/oder verformbaren Abstandshalter, eine Anlagefläche für das Werkstück sowie einen Stempel zum Umformen eines Nietabschnitts des Nietelements aufweist.

Gemäß einer bevorzugten Ausführungsform ist die Position des Abstandshalters justierbar. Die Justierbarkeit der Position ist vorzugsweise sowohl in der Ebene der Anlagefläche als auch bezüglich der Länge eines z.B. aus der Anlagefläche herausragenden Abschnitts des Abstandshalters möglich. Hierdurch kann insbesondere der wohldefinierte Abstand zwischen dem Werkstück und der Matrize bedarfsgerecht eingestellt werden. Zum anderen kann die Position des Abstandshalters nach den Erfordernissen des zu lagernden Werkstücks angepasst werden. Der Abstandshalter kann zudem lösbar mit der Matrize verbunden sein, um den Abstandshalter z.B. aufgrund einer verschleißbedingten Abnutzung austauschen zu können. Ebenso können unterschiedliche Abstandshalter, z.B. mit verschiedenen Längen, in Verbindung mit einer einzigen Matrize verwendet werden.

Gemäß einer bevorzugten Ausführungsform sind mehrere, insbesondere drei Abstandshalter symmetrisch um den Stempel der Matrize angeordnet. Beispielsweise können die Abstandshalter auf einer Kreisbahn um den Stempel angeordnet werden. Gemäß einer Ausführungsform sind drei stiftartig ausgebildete Abstandshalter symmetrisch um den Stempel angeordnet. Hierdurch kann eine besonders vorteilhafte Drei-Punkt-Lagerung des Werkstücks realisiert werden. Ferner können die jeweiligen Endabschnitte der Abstandshalter, welche dem Werkstück zugewandt sind, konvex ausgebildet sein, um eine mechanisch günstige und beschädigungsvorbeugende Lagerung des Werkstücks zu gewährleisten, wenn das Werkstück in Richtung der Anlagefläche bewegt wird.

Ferner ist der Abstandshalter vorzugsweise radial beabstandet von dem Stempel angeordnet. Hierdurch ist gewährleistet, dass der Nietabschnitt vollständig in den Spalt eingreifen kann und nicht etwa durch den Abstandshalter behindert wird. Der radiale Abstand zu dem Stempel kann insbesondere so gewählt werden, dass der Nietabschnitt das Werkstück im Bereich des Lochs vollständig hintergreifen kann. Gemäß einer weiteren Ausführungsform weist die Matrize eine Umformfläche auf, durch die der Nietabschnitt des Nietelements zumindest abschnittsweise radial nach außen verformbar ist. Der Nietabschnitt ist durch die Umformfläche insbesondere in Richtung des Spalts verformbar. Die Umformfläche des Stempels ist hierfür bevorzugt zumindest abschnittsweise konisch und/oder konkav geformt. Die Umformfläche kann stetig oder abgesetzt durch eine oder mehrere Stufen in die Anlagefläche der Matrize übergehen. Ferner kann zwischen der Anlagefläche und dem Stempel eine Ausnehmung vorgesehen sein. Hierdurch kann beispielsweise ein insbesondere dickwandiger Nietabschnitts so umgeformt werden, dass dieser nicht vollständig in das Werkstück gepresst wird, wenn das Werkstück bis zur Anlagefläche hin bewegt wird.

Die Erfindung betrifft ferner ein Befestigungssystem gemäß Anspruch 13, zum Befestigen eines Nietelements an einem Werkstück, bevorzugt an einem Blechteil, insbesondere gemäß einer der vorstehend beschriebenen Ausführungsformen des erfindungsgemäßen Verfahrens, wobei das Werkstück ein zur Aufnahme eines Nietabschnitts des Nietelements vorgesehenes, vorgeformtes Loch aufweist und das zumindest im Bereich um das vorgeformte Loch eben ausgebildet ist. Das Befestigungssystem umfasst eine Matrize, insbesondere gemäß einer der vorstehend beschriebenen Ausführungsformen der erfindungsgemäßen Matrize, welche zumindest einen beweglichen und/oder verformbaren Abstandshalter aufweist, um das Werkstück während dem Befestigungsvorgang in einem wohldefinierten Abstand von einer Anlagefläche der Matrize zu positionieren, so dass zwischen einer Wandung des Lochs und einem Stempel der Matrize zum Umformen des Nietabschnitts ein Spalt gebildet ist. Das Befestigungssystem umfasst ferner einen Setzkopf zum Einbringen des Nietelements in das Werkstück, wobei das Nietelement zumindest teilweise in dem Setzkopf aufnehmbar ist.

Gemäß einer bevorzugten Ausführungsform weist der Setzkopf eine Werkstückanlagefläche auf, welche in einer Ebene mit einer Werkstückanlagefläche des Nietelements liegt, wenn das Nietelement in den Setzkopf aufgenommen ist. Beispielsweise kann die Werkstückanlagefläche des Nietelements zusammen mit der Werkstückanlagefläche des Setzkopfs eine gemeinsame Werkstückanlagefläche bilden, an welcher das Werkstück während zumindest eines Teils des Befestigungsvorgangs anliegt. Insbesondere dann, wenn das Werkstück in Richtung der Anlagefläche zu der Matrize hin bewegt wird, besitzt eine solche gemeinsame, vergrößerte Werkstückanlagefläche den Vorteil, dass die auf das Werkstück ausgeübte Kraft auf eine größere Fläche verteilt wird und eine abschnittsweise Überbeanspruchung des Werkstücks sowie hierdurch drohende Schäden oder Verformungen an dem Werkstück vermieden werden. Vorzugsweise erstreckt sich die Werkstückanlagefläche in radialer Richtung weiter nach außen als die Abstandshalter. Bereiche des Werkstücks, die mit den Abstandshaltern in Kontakt treten, werden dann durch die Werkstückanlagefläche in axialer Richtung abgestützt und es können unerwünschte Verformungen des Werkstücks, z.B. eine durch den Abstandshalter verursachte Auswölbung des Werkstücks, unterbunden werden.

Es versteht sich, dass im Rahmen der Beschreibung des erfindungsgemäßen Verfahrens genannte Merkmale ebenso auf die hier beschriebene Matrize sowie das hier beschriebenen Befestigungssystems angewandt werden können und umgekehrt. Somit sind alle hier beschriebenen Ausführungsformen der Matrize und des Befestigungssystems insbesondere dazu ausgebildet, nach einem oder mehreren der hier beschriebenen Ausführungsformen des Verfahrens betrieben zu werden. Ferner können alle hier beschriebenen Ausführungsformen der Matrize und des Befestigungssystems sowie alle hier beschriebenen Ausführungsformen des Verfahrens jeweils miteinander kombiniert werden.

Nachfolgend wird die vorliegende Erfindung rein beispielhaft anhand einer vorteilhaften Ausführungsform der Erfindung unter Bezugnahme auf die beigefügten Zeichnungen erläutert. Es zeigen:
- Fig. 1a und 1b: eine Ausführungsform des erfindungsgemäßen Verfahrens zur Befestigung eines Nietelements an einem Blechteil;
- Fig. 2: eine Perspektivansicht einer Matrize zum Ausführen des Verfahrens gemäß Fig. 1;
- Fig. 3: eine Querschnittansicht der Matrize von Fig. 2;
- Fig. 4: eine perspektivische Querschnittansicht der Matrize von Fig. 2;
- Fig. 5: eine Perspektivansicht eines Setzkopfs zum Ausführen des Verfahrens gemäß Fig. 1.

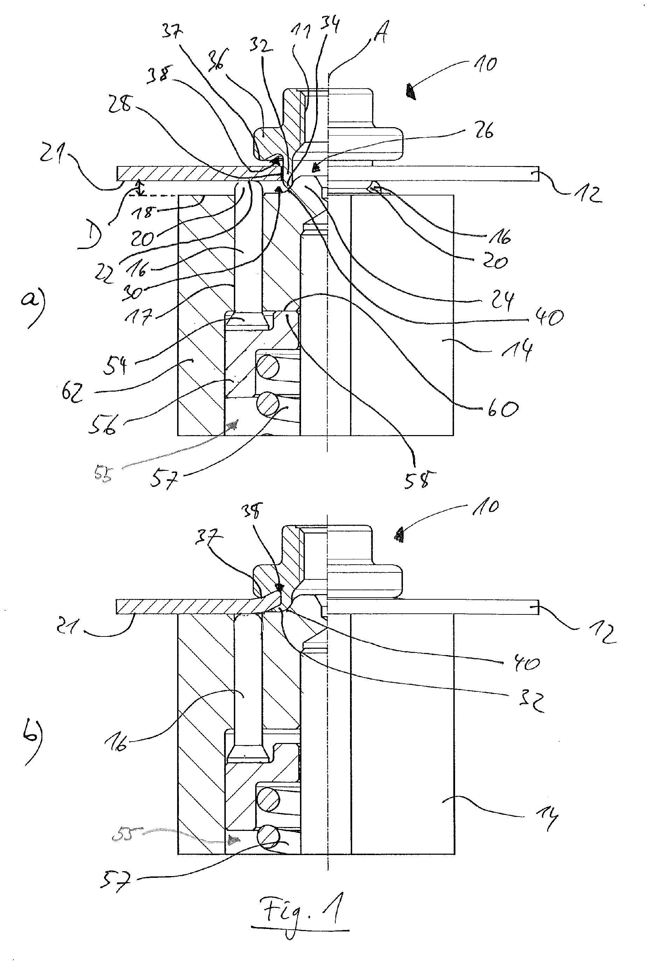

Fig. 1a und 1b zeigen zwei verschiedene Zustände während eines Befestigens eines rotationssymmetrisch ausgebildeten Nietelements 10 mit einem Innengewinde 11 an einem Blechteil 12. Es versteht sich, dass anstelle des Nietelements 10 auch anders gestaltete Nietelemente verwendet werden können und dass diese nicht notwendigerweise rotationssymmetrisch ausgebildet sein müssen. Auch Nietelemente mit einem Bolzenabschnitt - mit oder ohne Gewinde - sind vorstellbar.

Im Zuge des Befestigungsvorgangs wird das Nietelement 10 ausgehend von einer Position oberhalb des Blechteils 12 an dem Blechteil 12 befestigt. Hierbei befindet sich auf der gegenüberliegenden Seite des Blechteils 12 eine Matrize 14. Das Blechteil 12 lagert in Fig. 1a auf Abstandshaltern 16, welche beweglich an der Matrize 14 gelagert sind, wie nachfolgend näher erläutert wird.

Die Anordnung von Fig. 1a und Fig. 1b ist zweigeteilt in eine linksseitige Querschnittsansicht und eine rechtsseitige Seitenansicht. Die Grenze zwischen den beiden Ansichten verläuft durch eine Symmetrieachse A, welche sich sowohl auf das rotationssymmetrisch ausgebildete Nietelement 10, das Blechteil 12 - zumindest in einem Bereich um die Befestigungsstelle - und die Matrize 14 bezieht.

Die Abstandshalter 16 erstrecken sich parallel zu der Achse A, wobei die Abstandshalter in entsprechende Bohrungen 17 eines Matrizenkörpers 62 der Matrize 14 aufgenommen sind. Die Abstandshalter 16 sind jeweils stiftartig ausgebildet und weisen ein aus einer Anlagefläche 18 der Matrize 14 herausragenden Endabschnitt 20 auf. Die Länge der Endabschnitte 20 ist einheitlich so eingestellt, dass das Blechteil 12 waagerecht, d.h. senkrecht zur Achse A, auf den Abstandshaltern 16 lagert. Dadurch wird ein Abstand D zwischen einer Unterseite 21 des Blechteils 12 - d.h. der der Anlagefläche 18 zugewandten Seite des Blechteils 12 - und der Anlagefläche 18 eingestellt. Jeder Endabschnitt 20 umfasst eine dem Blechteil 12 zugewandte im Wesentlichen konvexe Lagerfläche 22.

Die Abstandshalter 16 weisen jeweils einen konischen Endabschnitt 54 auf, welcher sich auf einem konzentrisch zur Achse A und in einer Kammer 55 angeordneten Druckring 56 abstützt. Der Druckring 56 wird durch eine konzentrisch angeordnete und sich in axialer Richtung erstreckende Druckfeder 57 in axialer Richtung vorgespannt, so dass die mit dem Druckring 56 in Kontakt stehenden Abstandshalter 16 gleichmäßig in Richtung des Blechteils 12 vorgespannt werden. In Fig. 1a befinden sich die Abstandshalter 16 in einer ersten Position, in welcher die Länge des jeweiligen Endabschnitts 20 den Abstand D zwischen der Unterseite 21 des Blechteils 12 und der Anlagefläche 18 der Matrize 14 definiert. In der ersten Position sind die Abstandshalter 16 maximal ausgefahren. Dieser Zustand wird durch einen Anschlag definiert. Ein solcher Anschlag wird im hier beschriebenen Ausführungsbeispiel bereitgestellt, indem ein Anschlagabschnitt 58 des Druckrings 56 an einer Deckwand 60 der Kammer 55 anschlägt und eine weitere Bewegung des Druckrings 56 in Richtung zu dem Blechteil 12 hin unterbunden wird. Der Abstand D kann durch die Wahl geeignet dimensionierter Abstandshalter 16 eingestellt werden. Außerdem kann der Anschlag justierbar ausgestaltet sein, um den Abstand D bedarfsgerecht einstellen zu können.

Die Matrize 14 weist einen Stempel 24 auf, welcher teilweise in ein an dem Blechteil 12 vorgesehenes, kreisförmiges Loch 26 ragt. Die Achse A verläuft durch die entsprechenden Mittelpunkte des Stempels 24 und des Lochs 26. Diesbezüglich ist die Achse A somit eine Symmetrieachse für das Blechteil 12 - jedenfalls in dem Bereich um das Loch 26 - und die Matrize 14. Das Loch 26 wurde vor dem hier beschriebenen Befestigungsvorgang erzeugt.

Das Blechteil 12 ist im Bereich um das Loch 26 - abgesehen von vernachgeringfügigen, etwa durch die Bildung des Lochs 26 verursachten Verformungen - eben ausgebildet und weist in diesem Bereich keine Sicke auf. Optional kann das Blechteil 12 aber auch - wie in dem hier beschriebenen Ausführungsbeispiel - vollständig eben ausgebildet sein. Dies muss aber nicht notwendigerweise der Fall sein.

Zwischen einer Wandung 28 des Lochs 26 des Blechteils 12 und der Unterseite 21 des Blechteils 12 einerseits und dem Stempel 24 andererseits ist ein Spalt 30 gebildet.

Das Verfahren beginnt in einer nicht gezeigten Ausgangsituation, in der das Nietelement 10 von einer Position oberhalb des Blechteils 12 in axialer Richtung in Richtung zu der Matrize 14 hin bewegt wird, wobei ein Nietabschnitt 32 des Nietelements 10 mit dem Loch 26 des Blechteils 12 fluchtet (koaxiale Ausrichtung). Der Nietabschnitt 32 erstreckt sich in axialer Richtung von einem Flanschabschnitt 36 des Nietelements 10 weg und weist eine außen abgerundete und innen konische Endkante 34 auf. Auf der anderen Seite des Flanschabschnitts 36 ist ein das Gewinde 11 zumindest teilweise tragender Funktionsabschnitt vorgesehen. Das Nietelement 10 ist ein Mutterelement.

In einem Übergangsbereich zwischen dem Flanschabschnitt 36 und dem Nietabschnitt 32 ist eine umlaufende Nut 38 vorgesehen. Der Außendurchmesser des Nietabschnitts 32 ist geringfügig kleiner als der Durchmesser des Lochs 26, so dass der Nietabschnitt 32 in das Loch 26 einführbar ist.

In dem in Fig. 1a gezeigten Zustand wurde das Nietelement 10 bereits so weit in Richtung zu der Matrize hin bewegt, dass der Nietabschnitt 32 in das Loch 26 ragt. Bei einer weiteren Bewegung des Nietelements 10 in Richtung hin zu der Matrize 14 wirkt der innen liegende Teil der Endkante 34 des Nietabschnitts 32 mit einer konkav ausgebildeten Umformfläche 40 des Stempels 24 zusammen und der Nietabschnitt 32 wird radial nach außen verformt, so dass der Nietabschnitt 32 in den Spalt 30 eingreift und das Blechteil 12 hintergreift.

Während des Umformens des Nietabschnitts 32 wird das Nietelement 10 weiter in Richtung zu der Matrize 14 hin versetzt, wobei der Flanschabschnitt 36 mit einer Anlagefläche 37 an dem Blechteil 12 zur Anlage kommt. Die Länge des Nietabschnitts 32 bzw. der Abstand D sind so angepasst, dass der Flanschabschnitt 36 erst dann an dem Blechteil 12 zur Anlage kommt, wenn der Nietabschnitt 32 im Zuge des Umformens das Blechteil 12 zumindest teilweise hintergreift, insbesondere wenn das die Hintergreifung erzeugende Umformen abgeschlossen ist.

Das Nietelement 10 wird nun weiter in Richtung zu der Matrize 14 hin bewegt, wobei das Blechteil 12 in Richtung zu der Anlagefläche 18 der Matrize 14 hin mitbewegt wird. Die Vorspannkraft der Druckfeder 57 ist so angepasst, dass die Abstandshalter 16 durch die Bewegung des Blechteils 12 entgegen die Vorspannkraft zurückgedrängt werden, d.h. die Abstandshalter 16 werden in axialer Richtung weiter in die Kammer 55 gedrückt, so dass sich die jeweilige Länge der aus der Anlagefläche 18 herausragenden Endabschnitte 20 verkürzt.

In Fig. 1b ist das Blechteil 12 mit dem Nietelement 10 unmittelbar nach dem Abschluss des Befestigungsverfahrens gezeigt, wobei das Blechteil 12 noch an der Anlagefläche 18 der Matrize 14 anliegt. Es ist ersichtlich, dass das Blechteil 12 während seiner Bewegung von der in Fig. 1a gezeigten Position in Richtung zu der Matrize 14 hin im Bereich des hintergreifenden Nietabschnitts 32 eine Verformung erfährt. Hierbei weicht der ursprünglich an das Loch 26 angrenzende Bereich des Blechteils 12 aufgrund eines Zusammenwirkens mit dem das Blechteil 12 hintergreifenden Nietabschnitt 32 aus und wird in die Nut 38 des Nietelements 10 gepresst. Gleichzeitig wird der hintergreifende Nietabschnitt 32 durch ein Zusammenwirken mit der Umformfläche 40 des Stempels 24 vollständig in die senkrecht zur Achse A verlaufenden Ebene des Blechteils 12 versetzt, sodass die der Matrize 14 zugewandte Unterseite 21 des Blechteils 12 im Wesentlichen eben ausgebildet ist. D.h. der umgeformte Nietabschnitt 32 ragt nicht aus der Ebene der Unterseite 21 hervor. Zusätzlich wird der Nietabschnitt 32 teilweise so deformiert, dass der Nietabschnitt 32 sich im Ergebnis an das Blechteil 12 anschmiegt. Hierdurch wird ein besonders guter Form- und Kraftschluss zwischen dem Nietelement 10 und dem Blechteil 12 erzielt.

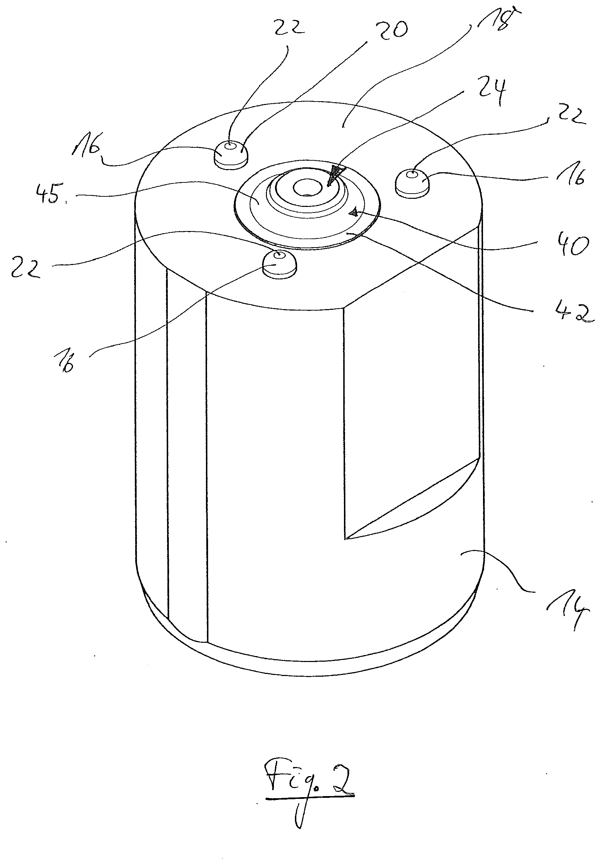

Fig. 2 zeigt eine Perspektivansicht der Matrize 14 aus Fig. 1. Die Matrize 14 weist drei symmetrisch um den Stempel 24 angeordnete Abstandshalter 16 auf, die mit ihrem jeweiligen Endabschnitt 20, entsprechend zu der in Fig. 1a gezeigten Position, aus der Anlagefläche 18 der Matrize 14 herausragen. Die Abstandshalter 16 sind jeweils radial beabstandet von dem Stempel 24 angeordnet.

Die Umformfläche 40 umfasst einen äußeren Auslaufabschnitt 42, welcher in einen gekrümmten oder gewölbten inneren Umformabschnitt 45 übergeht. Dieser kann - zusätzlich oder alternativ - konkave Abschnitte aufweisen Die Anlagefläche 18 ist gegenüber dem Auslaufabschnitt 42 des Stempels 24 in axialer Richtung abgesetzt (Fig. 1a, Fig. 1b und Fig. 2). Hierdurch wird zuverlässig erreicht, dass der hintergreifende Nietabschnitt 32 nach dem Befestigen des Nietelements 10 vollständig in die Ebene des Blechteils 12 versetzt ist, so dass die Unterseite 21 des Blechteils 12 eine ebene Anlagefläche bildet.

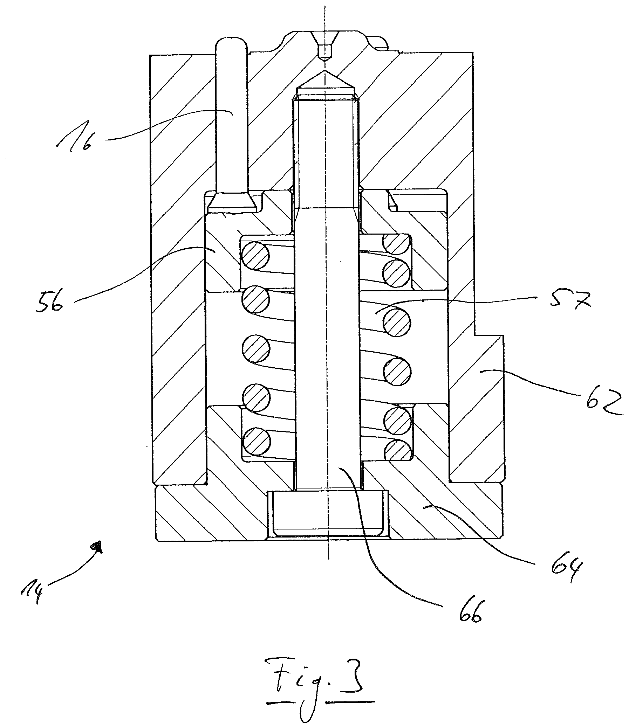

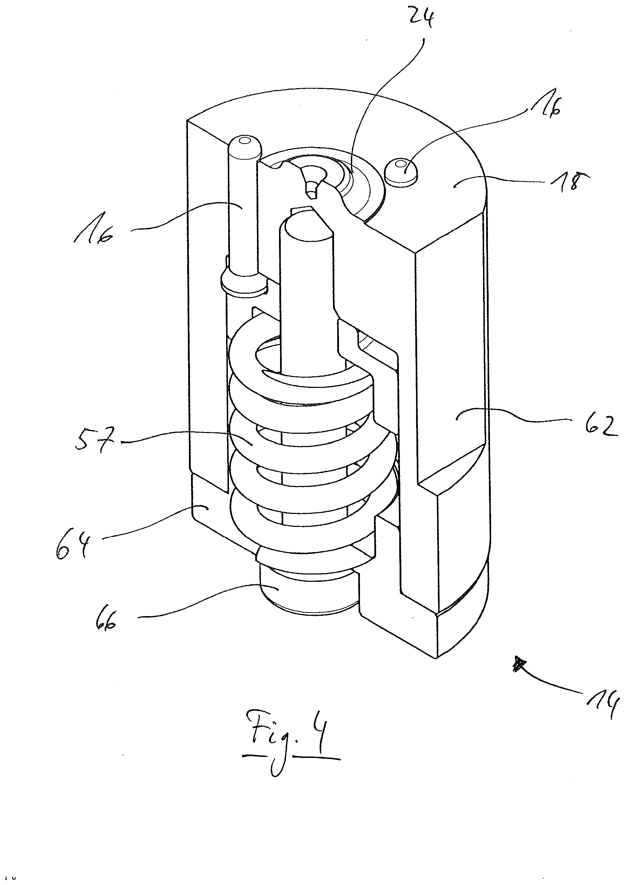

Fig. 3 zeigt eine Querschnittsansicht der Matrize 14, welche teilweise schon in Fig. 1 gezeigt ist. Aus Fig. 3 ist insbesondere ersichtlich, dass sich die Druckfeder 57 mit ihrem dem Druckring 56 abgewandten Ende auf einem Matrizenboden 64 der Matrize 14 abstützt, welcher teilweise in den Matrizenkörper 62 eingreift. Der Matrizenboden 64 wird mittels einer Schraube 66 an dem Matrizenkörper 62 befestigt. Die axiale Position des Matrizenbodens 64 ist relativ zu dem Matrizenkörper 62 durch die Schraube 66 einstellbar. Durch die axiale Position des Matrizenbodens 64 ist der Kompressionsgrad der Druckfeder 57 regulierbar, um die Vorspannkraft der Druckfeder 57 bedarfsgerecht einstellen zu können. Wird der Matrizenboden 64 beispielsweise von der in Fig. 3 dargestellten Position durch eine entsprechende Schraubbewegung der Schraube 66 axial nach unten versetzt, verringert sich die Vorspannkraft entsprechend einer Federcharakteristik der Druckfeder 57. In Fig. 4 ist die Matrize von Fig. 3 in einer geschnittenen Perspektivansicht von schräg oben gezeigt.

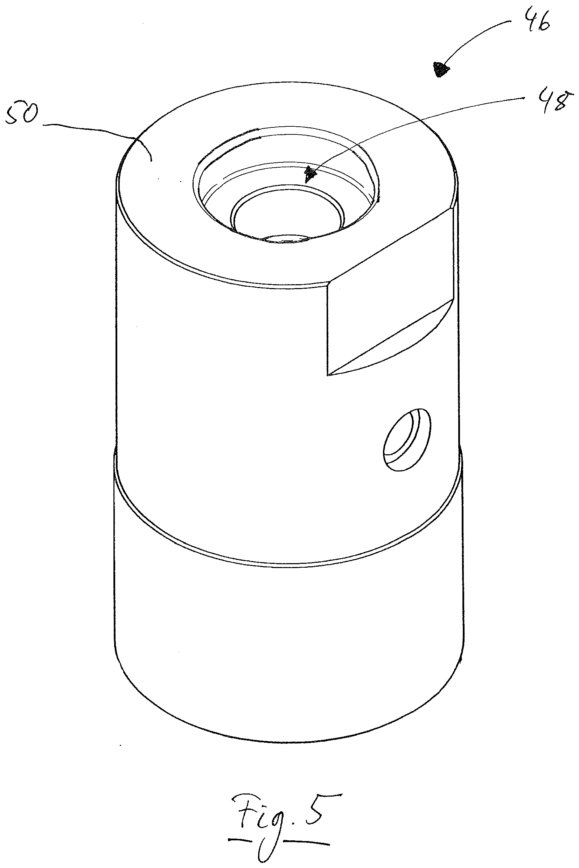

Fig. 5 zeigt eine Perspektivansicht eines Setzkopfs 46, durch den das Nietelement 10 ausgehend von der der nicht gezeigten Ausgangssituation in die in Fig. 1a und Fig. 1b dargestellten Positionen in Richtung zu der Matrize 14 hin bewegt und an dem Blechteil 12 befestigt werden kann. Der Setzkopf 46 weist einen Aufnahmeraum 48 auf, welcher komplementär zu dem Nietelement 10 ausgebildet ist, so dass das Nietelement 10 in dem Aufnahmeraum 48 aufnehmbar bzw. in den Aufnahmeraum 48 einsetzbar ist. Der Aufnahmeraum 48 ist so dimensioniert, dass bei eingesetztem Nietelement 10 nur der Nietabschnitt 32 aus einer Anlagefläche 50 des Setzkopfs 46 herausragt. Somit bildet der Flanschabschnitt 36 bzw. seine Anlagefläche 37 zusammen mit der Anlagefläche 50 des Setzkopfs 46 eine gemeinsame Anlagefläche für das Blechteil 12. Der Durchmesser der Anlagefläche 50 entspricht in etwa dem Durchmesser der Anlagefläche 18 der Matrize 14 (was aber keine zwingende Ausgestaltung ist). Die Anlagefläche 50 des Setzkopfs 46 sorgt dafür, dass sich Bereiche des Blechteils 12, die mit den Abstandshalter 16 in Kontakt stehen, während dem Befestigungsvorgang in axialer Richtung abstützen können. Unerwünschte Verformungen des Blechteils 12 durch die Abstandshalter 16 werden so vermieden.

### Bezugszeichenliste

- 10: Nietelement
- 11: Innengewinde
- 12: Blechteil
- 14: Matrize
- 16: Abstandshalter
- 17: Bohrung
- 18: Anlagefläche
- 20: Endabschnitt
- 21: Blechteilunterseite
- 22: Lagerfläche
- 24: Stempel
- 26: Loch
- 28: Wandung
- 30: Spalt
- 32: Nietabschnitt
- 34: Endkante
- 36: Flanschabschnitt
- 37: Anlagefläche
- 38: Nut
- 40: Umformfläche
- 42: Auslaufabschnitt
- 45: Umformabschnitt
- 46: Setzkopf
- 48: Aufnahmeraum
- 50: Anlagefläche
- 54: Endabschnitt
- 56: Druckring
- 57: Druckfeder
- 58: Anschlagabschnitt
- 60: Deckwand
- 62: Matrizen körper
- 64: Matrizenboden
- 66: Schraube

- A: Symmetrieachse
- D: Abstand

## Patentansprüche

1. Verfahren zum Befestigen eines Nietelements (10) an einem Werkstück, insbesondere an einem Blechteil (12), das ein zur Aufnahme eines Nietabschnitts (32) des Nietelements (10) vorgesehenes, vorgeformtes Loch (26) aufweist und das zumindest im Bereich um das vorgeformte Loch (26) eben ausgebildet ist,
wobei das Werkstück (12) vor dem Befestigungsvorgang mittels zumindest einem beweglich und/oder elastisch ausgebildeten Abstandshalter (16) einer Matrize (14) zum Umformen des Nietabschnitts (32) in einem wohldefinierten Abstand (D) von einer Anlagefläche (18) der Matrize (14) positioniert wird, so dass zwischen einer Wandung (28) des Lochs (26) und einem zum Umformen des Nietabschnitts (32) vorgesehenen Stempel (24) der Matrize (14) ein Spalt (30) gebildet ist, und wobei der Nietabschnitt (32) im Zuge des Befestigungsvorgangs in den Spalt (30) eingebracht wird und durch den Stempel (24) umgeformt wird, um das Werkstück (12) im Bereich des Loches (26) zu hintergreifen,
**dadurch gekennzeichnet, dass**
das Werkstück (12) erst nach dem Beginn eines Umformens des Nietabschnitts (32) zu der Anlagefläche (18) hin bewegt wird.

2. Verfahren nach Anspruch 1,
**dadurch gekennzeichnet, dass**
der Abstandshalter (16) zumindest vor dem Befestigungsvorgang aus der Anlagefläche (18) der Matrize (14) herausragt, wobei der aus der Anlagefläche (18) herausragende Abschnitt (20) des Abstandshalters (16) den Abstand (D) definiert.

3. Verfahren nach Anspruch 1 oder 2,
**dadurch gekennzeichnet, dass**
das Werkstück (12) erst nach einem zumindest abschnittsweisen Einbringen des Nietabschnitts (32) in den Spalt (30) zu der Anlagefläche (18) hin bewegt wird.

4. Verfahren nach zumindest einem der vorstehenden Ansprüche,
**dadurch gekennzeichnet, dass**
das Werkstück (12) erst nach dem Abschluss des Umformens des Nietabschnitts (32) zu der Anlagefläche (18) hin bewegt wird.

5. Verfahren nach zumindest einem der vorstehenden Ansprüche,
**dadurch gekennzeichnet, dass**
das Werkstück (12) durch einen Anschlagabschnitt des Nietelements (10), insbesondere einen Flanschabschnitt (36) des Nietelements (10) und/oder einen das Nietelement (10) einbringenden Setzkopf (46) zu der Anlagefläche (18) hin bewegt wird.

6. Verfahren nach zumindest einem der vorstehenden Ansprüche,
**dadurch gekennzeichnet, dass**
der Abstandshalter (16) durch eine zugeordnete Vorspanneinrichtung (57) mit einer definierten Kraft in eine erste Position vorgespannt wird und/oder wobei der Abstandshalter (16) aufgrund von elastischen Eigenschaften des Abstandshalters (16) eine erste Position einnimmt, und wobei der Abstandshalter (16) in der ersten Position den Abstand (D) definiert.

7. Verfahren nach Anspruch 6,
**dadurch gekennzeichnet, dass**
der Abstandshalter (16) während dem Befestigungsvorgang aus der ersten Position verfahren und/oder verformt wird, wenn das Werkstück (12) zu der Anlagefläche (18) hin bewegt wird.

8. Verfahren nach Anspruch 6 oder 7,
**dadurch gekennzeichnet, dass**
der Abstandshalter (16) während dem Befestigungsvorgang aus der ersten Position in eine zweite Position verfahren und/oder verformt wird, insbesondere wobei der Abstandshalter (16) in der zweiten Position im Wesentlichen vollständig in einen Innenbereich der Matrize (14) versetzt ist.

9. Verfahren nach zumindest einem der vorstehenden Ansprüche,
**dadurch gekennzeichnet, dass**
das Werkstück (12) zumindest im Bereich des ihn hintergreifenden Nietabschnitts (32) in einen Aufnahmeraum, insbesondere in eine Nut (38) gepresst wird, der an einem Anschlagabschnitt, insbesondere Flanschabschnitt (36) des Nietelements ausgebildet ist.

10. Matrize (14) zum Befestigen eines Nietelements (10) an einem Werkstück, bevorzugt an einem Blechteil (12), gemäß einem Verfahren nach zumindest einem der Ansprüche 1 bis 9, wobei die Matrize (14) zumindest einen beweglichen und/oder verformbaren Abstandshalter (16), eine Anlagefläche (18) für das Werkstück (12) sowie einen Stempel (24) zum Umformen eines Nietabschnitts (32) des Nietelements (10) aufweist, **dadurch gekennzeichnet, dass** der Abstandshalter (16) durch eine Vorspanneinrichtung (57) mit einer definierten Kraft aus der Anlagefläche (18) herausdrückbar ist, wobei der Abstandshalter derart ausgestaltet ist, dass das Werkstück (12) erst nach dem Beginn eines Umformens des Nietabschnitts (32) zu der Anlagefläche (18) hin bewegt wird, und wobei die Matrize (14) zumindest zwei Abstandshalter (16) aufweist, die gemeinsam von der Vorspanneinrichtung (57) mit der definierten Kraft beaufschlagbar sind.

11. Matrize (14) nach Anspruch 10, **dadurch gekennzeichnet, dass** Mittel vorgesehen sind, um die Position des Abstandshalters (16) in der Ebene der Anlagefläche (18) und/oder der Betrag, um den der Abstandshalter (16) über die Anlagefläche (18) hinausragt, zu justieren.

12. Matrize (14) nach zumindest einem der Ansprüche 10 bis 11,
**dadurch gekennzeichnet, dass**
die Matrize (14) eine Umformfläche (40) aufweist, durch die der Nietabschnitt (32) des Nietelements (10) zumindest abschnittsweise radial nach außen verformbar ist, insbesondere wobei die Umformfläche (40) zumindest abschnittsweise konisch und/oder konkav geformt ist.

13. Befestigungssystem zum Befestigen eines Nietelements (10) an einem Werkstück, bevorzugt an einem Blechteil (12), gemäß einem Verfahren nach zumindest einem der Ansprüche 1 bis 9, wobei das Werkstück (12) ein zur Aufnahme eines Nietabschnitts (32) des Nietelements (10) vorgesehenes, vorgeformtes Loch (26) aufweist und das zumindest im Bereich um das vorgeformte Loch (26) eben ausgebildet ist,
wobei das Befestigungssystem eine Matrize (14), nach zumindest einem der Ansprüche 10 bis 12 umfasst, um das Werkstück (12) während dem Befestigungsvorgang in einem wohldefinierten Abstand (D) von der Anlagefläche (18) der Matrize (14) zu positionieren, so dass zwischen einer Wandung (28) des Lochs (26) und dem Stempel (24) der Matrize (14) ein Spalt (30) gebildet ist,
wobei das Befestigungssystem ferner einen Setzkopf (46) umfasst, in dem das Nietelement (10) zumindest teilweise aufnehmbar ist, insbesondere wobei der Setzkopf (46) eine Werkstückanlagefläche (50) aufweist, welche in einer Ebene mit einer Werkstückanlagefläche (37) des Nietelements (10) liegt, wenn das Nietelement (10) in den Setzkopf (46) aufgenommen ist.

## Claims

1. A method of fastening a rivet element (10) to a workpiece (12), in particular to a sheet metal part (12), which has a preshaped hole (26) provided for the reception of a rivet section (32) of the rivet element (10) and which is made planar at least in the region around the preshaped hole (26),
wherein, prior to the fastening process, the workpiece (12) is positioned at a well-defined spacing (D) from a contact surface (18) of a die (14) by means of at least one movable and/or elastic spacer (16) of the die (14) for reshaping the rivet section (32) so that a gap (30) is formed between a wall (28) of the hole (26) and a punch (24) of the die (14) which is provided for the reshaping of the rivet section (32), and wherein the rivet section (32) is introduced into the gap (30) in the course of the fastening process and is reshaped by the punch (24) in order to engage behind the workpiece (12) in the region of the hole (26),
**characterized in that**
the workpiece (12) is only moved toward the contact surface (18) after the start of a reshaping of the rivet section (32).

2. A method in accordance with claim 1,
**characterized in that**
the spacer (16) at least projects out of the contact surface (18) of the die (14) prior to the fastening process, with the section (20) of the spacer (16) which projects out of the contact surface (18) defining the spacing (D).

3. A method in accordance with claim 1 or claim 2,
**characterized in that**
the workpiece (12) is only moved toward the contact surface (18) after an at least sectional introduction of the rivet section (32) into the gap (30).

4. A method in accordance with at least one of the preceding claims,
**characterized in that**
the workpiece (12) is only moved toward the contact surface (18) after the completion of the reshaping of the rivet section (32).

5. A method in accordance with at least one of the preceding claims,
**characterized in that**
the workpiece (12) is moved toward the contact surface (18) by an abutment portion of the rivet element (10), in particular by a flange portion (36) of the rivet element (10) and/or by a setting head (46) which introduces the rivet element (10).

6. A method in accordance with at least one of the preceding claims,
**characterized in that**
the spacer (16) is preloaded into a first position by an associated preloading device (57) with a defined force, and/or with the spacer (16) adopting a first position due to elastic properties of the spacer (16), and with the spacer (16) defining the spacing (D) in the first position.

7. A method in accordance with claim 6,
**characterized in that**
the spacer (16) is moved and/or reshaped from the first position during the fastening process when the workpiece (12) is moved toward the contact surface (18).

8. A method in accordance with claim 6 or claim 7,
**characterized in that**
the spacer (16) is moved and/or reshaped from the first position into a second position during the fastening process, in particular with the spacer (16) being substantially fully displaced into an inner region of the die (14) in the second position.

9. A method in accordance with at least one of the preceding claims,
**characterized in that**
the workpiece (12) is pressed, at least in the region of the rivet section (32) engaging behind the workpiece (12), into a reception space, in particular into a groove (38), which is formed at an abutment portion, in particular a flange portion (36), of the rivet element.

10. A die (14) for fastening a rivet element (10) to a workpiece, preferably to a sheet metal part (12), in accordance with a method in accordance with at least one of the claims 1 to 9, wherein the die (14) has at least one spacer (16) which is movable and/or deformable, a contact surface (18) for the workpiece (12) and a punch (24) for reshaping a rivet section (32) of the rivet element (10), **characterized in that** the spacer (16) can be pushed out of the contact surface (18) by a preloading device (57) with a defined force, with the spacer being adapted such that the workpiece (12) is only moved toward the contact surface (18) after the start of a reshaping of the rivet section (32), and with the die (14) having at least two spacers (16) which can be jointly acted on by the preloading device (57) with the defined force.

11. A die (14) in accordance with claim 10,
**characterized in that**
means are provided to adjust the position of the spacer (16) in the plane of the contact surface (18) and/or the amount by which the spacer (16) projects beyond the contact surface (18).

12. A die in accordance with at least one of the claims 10 to 11,
**characterized in that**
the die (14) has a reshaping surface (40) by which the rivet section (32) of the rivet element (10) can be reshaped radially outwardly at least sectionally, in particular with the reshaping surface (40) being at least sectionally conical and/or concave.

13. A fastening system for fastening a rivet element (10) to a workpiece (12), preferably to a sheet metal part (12), in accordance with a method in accordance with at least one of the claims 1 to 9, wherein the workpiece (12) has a preshaped hole (26) provided for the reception of a rivet section (32) of the rivet element (10) and is made planar at least in the region around the preshaped hole (26),
wherein the fastening system comprises a die (14) in accordance with at least one of the claims 10 to 12 in order to position the workpiece (12) at a well-defined spacing (D) from the contact surface (18) of the die (14) during the fastening process so that a gap (30) is formed between a wall (28) of the hole (26) and the punch (24) of the die (14),
wherein the fastening system furthermore comprises a setting head (46) in which the rivet element (10) is receivable at least in part, in particular wherein the setting head (46) has a workpiece contact surface (50) which lies in a plane with a workpiece contact surface (37) of the rivet element (10) when the rivet element (10) is received in the setting head (46).

## Revendications

1. Procédé de fixation d'un élément de rivet (10) sur une pièce à œuvrer, en particulier sur une pièce en tôle (12) qui présente un trou préformé (26) prévu pour recevoir une portion de rivet (32) de l'élément de rivet (10) et qui est réalisée de façon plane au moins dans la zone autour du trou préformé (26),
dans lequel
avant l'opération de fixation, la pièce à œuvrer (12) est positionnée à une distance bien définie (D) par rapport à une surface d'appui (18) d'une matrice (14) de façonnage de la portion de rivet (32), au moyen d'au moins un élément écarteur (16) de la matrice (14) qui est réalisé de façon mobile et/ou élastique, de sorte qu'un interstice (30) est formé entre une paroi (28) du trou (26) et un poinçon (24) de la matrice (14) prévu pour façonner la portion de rivet (32), et
au cours de l'opération de fixation, la portion de rivet (32) est introduite dans l'interstice (30) et est façonnée par le poinçon (24) pour engager par l'arrière la pièce à œuvrer (12) dans la zone du trou (26),
**caractérisé en ce que**
la pièce à œuvrer (12) n'est déplacée vers la surface d'appui (18) qu'après qu'un façonnage de la portion de rivet (32) a commencé.

2. Procédé selon la revendication 1,
**caractérisé en ce que**
l'élément écarteur (16) fait saillie de la surface d'appui (18) de la matrice (14) au moins avant l'opération de fixation, la portion (20) de l'élément écarteur (16) faisant saillie de la surface d'appui (18) définissant la distance (D).

3. Procédé selon la revendication 1 ou 2,
**caractérisé en ce que**
la pièce à œuvrer (12) n'est déplacée vers la surface d'appui (18) qu'après que la portion de rivet (32) a été introduite au moins localement dans l'interstice (30).

4. Procédé selon l'une au moins des revendications précédentes,
**caractérisé en ce que**
la pièce à usiner (12) n'est déplacée vers la surface d'appui (18) qu'après que le façonnage de la portion de rivet (32) est achevé.

5. Procédé selon l'une au moins des revendications précédentes,
**caractérisé en ce que**
la pièce à œuvrer (12) est déplacée vers la surface d'appui (18) par une portion de butée de l'élément de rivet (10), en particulier par une portion de bride (36) de l'élément de rivet (10), et/ou par une tête de pose (46) qui introduit l'élément de rivet (10).

6. Procédé selon l'une au moins des revendications précédentes,
**caractérisé en ce que**
l'élément écarteur (16) est précontraint avec une force définie vers une première position par un dispositif de précontrainte associé (57), et/ou l'élément écarteur (16) prend une première position en raison des propriétés élastiques de l'élément écarteur (16), et
dans la première position, l'élément écarteur (16) définit la distance (D).

7. Procédé selon la revendication 6,
**caractérisé en ce que**
pendant l'opération de fixation, l'élément écarteur (16) est déplacé et/ou déformé à partir de la première position, lorsque la pièce à œuvrer (12) est déplacée vers la surface d'appui (18).

8. Procédé selon la revendication 6 ou 7,
**caractérisé en ce que**
pendant l'opération de fixation, l'élément écarteur (16) est déplacé et/ou déformé de la première position à une seconde position, et, en particulier dans la seconde position, l'élément écarteur (16) est décalé sensiblement complètement jusque dans une zone intérieure de la matrice (14).

9. Procédé selon l'une au moins des revendications précédentes,
**caractérisé en ce que**
la pièce à œuvrer (12) est pressée, au moins dans la zone de la portion de rivet (32) qui l'engage par l'arrière, jusque dans un espace de réception, en particulier dans une rainure (38), qui est formé(e) sur une portion de butée, en particulier sur une portion de bride (36), de l'élément de rivet.

10. Matrice (14) pour la fixation d'un élément de rivet (10) sur une pièce à œuvrer, de préférence sur une pièce en tôle (12), par un procédé selon l'une au moins des revendications 1 à 9, la matrice (14) comprenant au moins un élément écarteur (16) mobile et/ou déformable, une surface d'appui (18) pour la pièce à œuvrer (12) et un poinçon (24) pour façonner une portion de rivet (32) de l'élément de rivet (10),
**caractérisée en ce que**
l'élément écarteur (16) peut être pressé hors de la surface d'appui (18) avec une force définie par un dispositif de précontrainte (57), l'élément écarteur étant conçu de telle sorte que la pièce à œuvrer (12) n'est déplacée vers la surface d'appui (18) qu'après qu'un façonnage de la portion de rivet (32) a commencé, et la matrice (14) comprenant au moins deux éléments écarteurs (16) susceptibles d'être sollicités conjointement avec une force définie par le dispositif de précontrainte (57).

11. Matrice (14) selon la revendication 10,
**caractérisée en ce que**
il est prévu des moyens pour ajuster la position de l'élément écarteur (16) dans le plan de la surface d'appui (18) et/ou pour ajuster la valeur de laquelle l'élément écarteur (16) fait saillie au-delà de la surface d'appui (18).

12. Matrice (14) selon l'une des revendications 10 à 11,
**caractérisée en ce que**
la matrice (14) présente une surface de façonnage (40) permettant de déformer au moins localement la portion de rivet (32) de l'élément de rivet (10) radialement vers l'extérieur, en particulier la surface de façonnage (40) étant au moins localement en forme conique et/ou concave.

13. Système de fixation pour la fixation d'un élément de rivet (10) sur une pièce à œuvrer, de préférence sur une pièce en tôle (12), par un procédé selon l'une au moins des revendications 1 à 9, dans lequel la pièce à œuvrer (12) présente un trou préformé (26) prévu pour recevoir une portion de rivet (32) de l'élément de rivet (10) et est réalisée de façon plane au moins dans la zone autour du trou préformé (26),
le système de fixation comprenant une matrice (14) selon l'une au moins des revendications 10 à 12 pour positionner la pièce à œuvrer (12) à une distance bien définie (D) par rapport à la surface d'appui (18) de la matrice (14), pendant l'opération de fixation, de sorte qu'un interstice (30) est formé entre une paroi (28) du trou (26) et le poinçon (24) de la matrice (14),
le système de fixation comprenant en outre une tête de pose (46) dans laquelle l'élément de rivet (10) peut être reçu au moins partiellement, en particulier la tête de pose (46) présentant une surface d'appui de pièce (50) qui se trouve dans un plan avec une surface d'appui de pièce (37) de l'élément de rivet (10) lorsque l'élément de rivet (10) est reçu dans la tête de pose (46).
